**Europäisches Patentamt**

**European Patent Office**

**Office européen des brevets**

(19)

(11) Veröffentlichungsnummer : **0 340 469 B1**

(12) # EUROPÄISCHE PATENTSCHRIFT

(45) Veröffentlichungstag der Patentschrift :
**04.03.92 Patentblatt 92/10**

(51) Int. Cl.$^5$ : **B60N 2/06**

(21) Anmeldenummer : **89106038.6**

(22) Anmeldetag : **06.04.89**

(54) **Verstellbarer, insbesondere in einem Fahrzeug anzuordnender Sitz.**

(30) Priorität : **04.05.88 DE 3815080**

(43) Veröffentlichungstag der Anmeldung :
**08.11.89 Patentblatt 89/45**

(45) Bekanntmachung des Hinweises auf die
Patenterteilung :
**04.03.92 Patentblatt 92/10**

(84) Benannte Vertragsstaaten :
**FR GB IT**

(56) Entgegenhaltungen :
**FR-A- 2 388 694**
**US-A- 3 174 715**
**US-A- 3 240 464**

(73) Patentinhaber : **KEIPER RECARO GmbH & Co.**
**Büchelstrasse 54-58**
**W-5630 Remscheid 14 (DE)**

(72) Erfinder : **Münchow, Andrea**
**Christianstrasse 3**
**W-5630 Remscheid (DE)**
Erfinder : **Engels, Bernd**
**230, South Eastway Drive**
**Battle Creek, Michigan 49015 (US)**

(74) Vertreter : **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

**Beschreibung**

Die Erfindung betrifft einen verstellbaren, insbesondere in einem Fahrzeug, vorzugsweise Kraftwagen anzuordnenden Sitz, dessen Sitzteil zu seiner Längsverstellung über eine aus Laufschienen und Stützschienen gebildete Führungsschienenanordnung am Fahrzeugboden abgestützt ist, wobei die einen Schienen Zahnstangen umfassen, in die in den anderen Schienen gelagerte, durch eine Übertragungswelle miteinander drehverbundene Ritzel eingreifen und die Übertragungswelle von einem Triebrad des ein Getriebe umfassenden Motors antreibbar ist, der an der das Ritzel mit einer Welle lagernden Schiene festgelegt ist.

Aus der DE-A 27 47 592 ist ein längsverstellbarer Sitz der vorgenannten Art bekannt, bei dem zwischen das Triebrad und die Ritzelwelle eine drehmomentbegrenzende Rutschkupplung geschaltet ist, die zwar ein zur Sitzverstellung ausreichendes Moment überträgt, jedoch bei einem der Sitzbewegung entgegentretenden Widerstand keine Beschädigungen von am Fahrzeugboden befindlichen Gegenständen verursacht und auch die Quetschgefahr von die Rücksitze benutzenden Fahrgästen weitgehend ausschaltet. Beim Ausfall des Motors ist jedoch eine Sitzverstellung nicht, oder nur mit großem Kraftaufwand gegen die Wirkung der Rutschkupplung möglich, da eine vollständige Trennung des Triebrades vom Motor nicht erfolgen kann.

Aus der DE-OS 27 33 484 ist eine Vorrichtung zu entnehmen, mit der ein motorischer Antrieb von den Triebrädern eines Gelenkbeschlages zur Verstellung der Rückenlehne eines Fahrzeugsitzes getrennt werden kann. Zu diesem Zweck ist ein lose auf der Triebwelle drehbares und vom Motor antreibbares Zahnrad über eine Kupplungsscheibe mit der Triebwelle drehfest verbunden, wobei über eine koaxial in der Triebwelle angeordnete Stellschraube eine axiale Verschiebung der Kupplungsscheibe ermöglicht wird, um im einen Fall eine drehmomentübertragende Verbindung zwischen dem Zahnrad und der Triebwelle herzustellen, oder aber, im anderen Fall die Verbindung zwischen Triebwelle und Zahnrad zu unterbrechen. Zu diesem Zweck weist die Stellschraube einen Schlitz für einen Schraubendreher auf, mit welchem die Stellschraube vom Sitzbenutzer zu betätigen ist. Bei dieser Betätigung kann es jedoch dazu kommen, daß nicht die Kupplungsscheibe außer Eingriff gelangt, sondern vielmehr die Stellschraube aus ihrer koaxialen Bohrung der Triebwelle herausgedreht wird, so daß zur Lösung der Kupplungsscheibe die Stellschraube in axialer Richtung im Lösesinne gestoßen werden muß. Eine derartige Betätigungsmöglichkeit ist jedoch in der Regel einem Sitzbenutzer nicht ohne weiteres zumutbar.

Die Aufgabe der vorliegenden Erfindung besteht darin, einen Sitz der vorgenannten Art dahingehend zu verbessern, daß eine vollständige drehmomentunterbrechende Trennung der Ritzelwelle vom Motor in einfacher, von der Bedienungsperson problemlos zu betätigender Weise möglich ist. Diese Aufgabe ist erfindungsgemäß dadurch gelöst, daß das eine durchgehende Mitnehmerbohrung aufweisende, im Getriebegehäuse des Motors gelagerte Abtriebsrad einen Mitnehmerzapfen der Ritzelwelle übergreift und zwischen Mitnehmer bohrung des Abtriebsrades und Mitnehmerzapfens der Ritzelwelle eine Übertragungsbuchse in und außer drehmomentübertragenden Eingriff axial verschiebbar angeordnet ist. Eine derartige Lösung erlaubt ein einfaches In- und Außereingriffschieben der Übertragungsbuchse, wozu Schwenkhebel, Schieber, Elektromagneten od. dgl. eingesetzt werden können. Eine derartige Lösung ist dann vom Sitzbenutzer leicht zu betätigen und stellt keine Anforderungen an dessen technisches Verständnis, wie dies bei der vorbekannten Kupplungseinrichtung eines Gelenkbeschlages der Fall ist.

Um einerseits die Übertragungsbuchse sicher in und außer Eingriff bringen zu können und andererseits das Drehmoment vom Motor auf das in die Zahnstange eingreifende Ritzel sicher übertragen zu können, ist nach einem Ausgestaltungsmerkmal der Erfindung die Ritzelwelle vorteilhaft mit einem Kerbzahnabschnitt versehen, in den einerseits die Übertragungsbuchse und andererseits die Übertragungswelle eingreift, wobei die Übertragungsbuchse mit einem Kerbzahnabschnitt ihres Außenumfanges in die Kerbverzahnung der Mitnehmerbohrung des Abtriebsrades des Getriebemotors eingreift. Eine einfache Befestigungsart des Getriebemotors wird erzielt, in dem dieser einerseits an einem Schraubzapfen befestigt ist und sich andererseits mit seinem im Getriebegehäuse gelagerten Abtriebsrad über die Übertragungsbuchse an der Ritzelwelle abstützt. Zu diesem Zweck ist nach einem weiteren Ausgestaltungsmerkmal der Erfindung die Übertragungsbuchse neben ihrem Kerbzahnabschnitt auf der in die Mitnehmerbohrung einragenden Seite mit einem Lagerabschnitt für die Mitnehmerbohrung versehen, wobei auf der aus der Mitnehmerbohrung ausragenden Seite die Übertragungsbuchse eine Ringnut zum Angriff eines Schaltgliedes aufweist. Dabei ist das Schaltglied vorteilhaft aus einem einen Handgriff und eine in die Ringnut der Übertragungsbuchse eingreifende Schaltgabel aufweisenden Steuerhebel gebildet. Zur selbst tätigen Auffindung der Kupplungslage der Übertragungsbuchse in der Mitnehmerbohrung des Abtriebsrades des Getriebemotors ist der Steuerhebel vorteilhaft an der die Ritzelwelle lagernden Schiene schwenkbar gehalten und von einem im Kupplungssinn wirkenden Kraftspeicher beaufschlagt. Dabei kann dieser Kraftspeicher vorteilhaft von einer den Steuerhebel umrundenden Schenkelfeder gebildet sein, deren einer Schenkel am Steuerhebel und deren anderer Schenkel an der Schiene abgestützt ist.

Obschon es denkbar ist, eine Anordnung zu treffen, bei der die Zahnstange an der sich bewegenden Laufschiene befestigt ist und der Getriebemotor mit den Übertragungselementen stationär mit der Stützschiene verbunden sein mag, so ist es doch hinsichtlich der manuellen Betätigung der Übertragungsbuchse vorteilhaft, wenn die Zahnstange an der Stützschiene festgelegt ist, während Ritzelwelle, Getriebemotor und Schaltglied der Laufschiene der Führungsschienenanordnung zugeordnet sind.

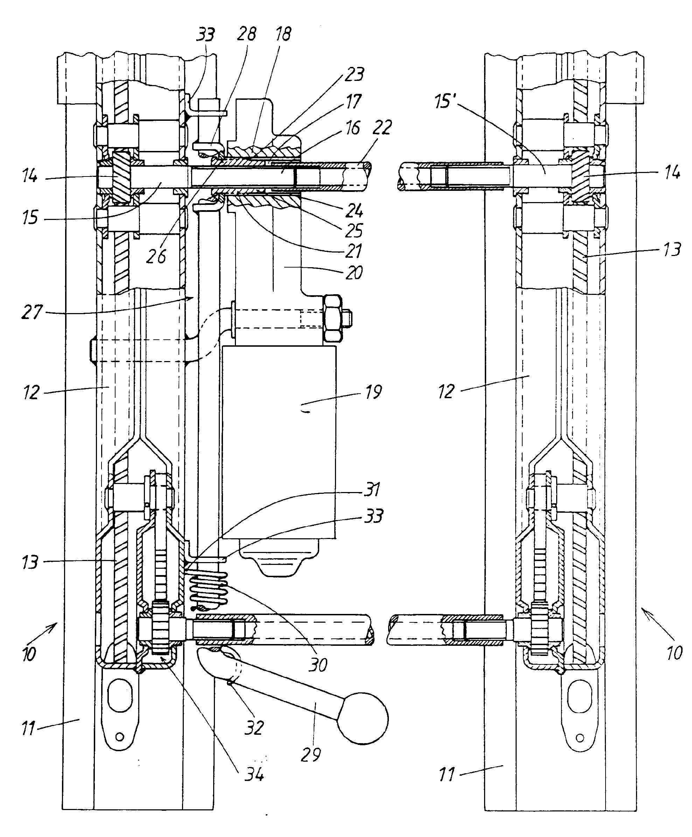

Die Erfindung ist nachfolgend anhand eines auf der Zeichnung in aufgebrochener Draufsicht dargestellten Ausführungsbeispieles näher erläutert.

Bei dem aus der Zeichnung ersichtlichen Ausführungsbeispiel ist auf beiden Sitzlängsseiten zwischen dem Sitz und dem Fahrzeugboden eine Führungsschienenanordnung 10 eingesetzt, die aus einer bodenseitigen Stützschiene 11 und einer daran in bekannter Weise längsverschiebbar geführten, mit dem Sitzteil fest verbundenen Laufschiene 12 gebildet ist. An der Stützschiene 11 des Ausführungsbeispieles ist eine Zahnstange 13 festgelegt, mit der jeweils ein Ritzel 14 kämmt. Die Ritzelwelle 15 ist in der Laufschiene 12 drehbar gelagert und weist einen Mitnehmerzapfen 16 auf, der als Kerbzahnabschnitt ausgebildet ist und in die Mitnehmerbohrung 17 des Abtriebrades 18 eines mit einem Motor 19 verbundenen Getriebes 20 eingreift. Der Kerbzahnabschnitt 16 der Ritzelwelle 15 ist einerseits von einer Übertragungsbuchse 21 umgriffen, und greift andererseits in eine Innenverzahnung einer rohrförmigen Übertragungswelle 22 ein, die auf der gegenüberliegenden Längsseite des Sitzes mit einer Ritzelwelle 15′ drehmomentübertragend verbunden ist. Die Übertragungsbuchse 21 weist an ihrem Außenumfang einen Kerbzahnabschnitt 23 auf, der in die Kerbverzahnung 24 in der Mitnehmerbohrung 17 des Abtriebrades 18 formschlüssig eingreift. Die Übertragungsbuchse 21 weist weiterhin einen kerbverzahnten Innenumfang auf, der in den Kerbzahnabschnitt des Mitnehmerzapfens 16 der Ritzelwelle 15 axial verschiebbar, aber drehmomentübertragend, paßt. Neben dem Kerbzahnabschnitt 23 der Übertragungsbuchse 21 weist diese einen Lagerabschnitt 25 auf, dessen Außendurchmesser mit dem Innendurchmesser der Mitnehmerbohrung 17 des Abtriebsrades 18 übereinstimmt. Auf der anderen Seite des Kerbzahnabschnittes 23 der Übertragungsbuchse 21 weist diese auf der aus der Mitnehmerbohrung 17 ausragenden Seite eine Ringnut 26 auf, in welche die Schaltgabel 28 eines Schaltgliedes 27 eingreift, das als Steuerhebel mit einem Handgriff 29 ausgebildet ist. Der Steuerhebel 27 ist in an der Laufschiene 12 festgelegten Konsolen 33 gelagert und wird im Bereich seines Handgriffs 29 von einem als Schenkelfeder 30 ausgebildeten Kraftspeicher umgriffen. Dabei weist die Schenkelfeder 30 einen sich an der Laufschiene 12 abstützenden Schenkel 31 und einen den Handgriff 29 übergreifenden und die Schaltgabel 28 im Eingriffssinne beaufschlagenden Schenkel 32 auf.

Aus der Zeichnung ist weiterhin ersichtlich, daß an der Laufschiene 12 eine mit dem Erfindungsgegenstand nicht zusammenhängende Höheneinstellvorrichtung 34 angeordnet ist.

In der Zeichnung ist der drehmomentübertragende Zustand zwischen dem Motor 19 und den in die Zahnstangen 13 ein greifenden Ritzeln 14 dargestellt. Um die Antriebsverbindung zwischen dem Motor 19 und den Ritzeln 14 zu unterbrechen, wird über den Handgriff 29 der Steuerhebel 27 derart verschwenkt, daß die Schaltgabel 28 gegen die Kraft der Schenkelfeder 30 derart verschwenkt, daß die Übertragungsbuchse 21 soweit nach links axial verschoben wird, daß deren Kerbzahnabschnitt 23 aus der Kerbverzahnung 24 in der Mitnehmerbohrung 17 des Abtriebrades 18 des Getriebes 20 so weit austritt, bis lediglich noch der Lagerabschnitt 25 in der Mitnehmerbohrung 17 des Abtriebrades 18 verbleibt. In dieser Lage der Übertragungsbuchse 21 kann der Sitzbenutzer durch Abstützen seiner Füße am Fahrzeugboden den Sitz in die gewünschte Sitzposition schieben, um bei aufgefundener Sitzposition den Handgriff 29 freizugeben, wonach die Schenkelfeder 30 über die Schaltgabel 28 die Übertragungsbuchse 21 mit ihrem Kerbzahnabschnitt 23 wieder in die Kerbverzahnung 24 der Mitnehmerbohrung 17 des Abtriebrades 18 eindrückt. Bei dem Getriebe 20 mag es sich um ein selbsthemmendes Schneckengetriebe handeln, so daß bei stillstehendem Motor 19 die Sitzpositionlage gesichert ist. Auf diese Weise ist sichergestellt, daß bei defektem Motor 19 selbst noch eine manuelle Verstellung der Sitzlängslage möglich ist.

Wie bereits erwähnt, gibt die dargestellte und vorbeschriebene Ausführung die Erfindung lediglich beispielsweise wieder, die keinesfalls allein darauf beschränkt ist. Es sind vielmehr noch mancherlei andere Ausführungen und Ausgestaltungen der Erfindung denkbar.

## Patentansprüche

1. Verstellbarer, insbesondere in einem Fahrzeug, vorzugsweise Kraftwagen anzuordnender Sitz, dessen Sitzteil zu seiner Längsverstellung über eine aus Laufschienen (12) und Stützschienen (11) gebildete Führungsschienenanordnung (10) am Fahrzeugboden abgestützt ist, wobei die einen Schienen Zahnstangen (13) umfassen, in die an den anderen Schienen gelagerte, durch eine Übertragungswelle (22) miteinander drehverbundene Ritzel (14) eingreifen und die Übertragungswelle (22) von einem Triebrad (18) des ein Getriebe (20) umfassenden Motors (19) antreibbar ist, der an der das Ritzel (14) mit einer Welle lagernden Schiene festgelegt ist,

**dadurch gekennzeichnet,**

daß das eine durchgehende Mitnehmerbohrung (17) aufweisende, im Getriebegehäuse (20) des Motors (19) gelagerte Abtriebsrad (18) einen Mitnehmerzapfen (16) der Ritzelwelle (15) übergreift und zwischen Mitnehmerbohrung (17) des Abtriebsrades (18) und Mitnehmerzapfen (16) der Ritzelwelle (15) eine Übertragungsbuchse (21) in und außer drehmomentübertragenden Eingriff axial verschiebbar angeordnet ist.

2. Sitz nach Anspruch 1, dadurch gekennzeichnet, daß die Ritzelwelle (15) einen Kerbzahnabschnitt (16) aufweist, in den einerseits die Übertragungsbuchse (21) und andererseits die Übertragungswelle (22) eingreift, wobei die Übertragungsbuchse (21) mit einem Kerbzahnabschnitt (23) ihres Außenumfanges in die Kerbverzahnung (24) der Mitnehmerbohrung (17) des Abtriebsrades (18) des Getriebemotors (19, 20) eingreift.

3. Sitz nach Anspruch 1 und/oder 2, dadurch gekennzeichnet, daß die Übertragungsbuchsen (21) neben ihrem Kerbzahnabschnitt (23) auf der in die Mitnehmerbohrung (17) einragenden Seite einen Lagerabschnitt (25) für die Mitnehmerbohrung (17) und auf der aus der Mitnehmerbohrung (17) ausragenden Seite eine Ringnut (26) zum Angriff eines Schaltgliedes (27) aufweist.

4. Sitz nach Anspruch 3, dadurch gekennzeichnet, daß das Schaltglied (27) aus einem einen Handgriff (29) und eine in die Ringnut (26) der Übertragungsbuchse (21) eingreifende Schaltgabel (28) aufweisenden Steuerhebel (27) gebildet ist.

5. Sitz nach Anspruch 4, dadurch gekennzeichnet, daß der Steuerhebel (27) an der die Ritzelwelle (15) lagernden Schiene (12) schwenkbar gehaltert und von einem im Kupplungssinne wirkenden Kraftspeicher (30) beaufschlagt ist.

6. Sitz nach Anspruch 5, dadurch gekennzeichnet, daß der Kraftspeicher von einer den Steuerhebel (27) umrundenden Schenkelfeder (30) gebildet ist, deren einer Schenkel (32) am Steuerhebel (27) und deren anderer Schenkel (31) an der Schiene (12) abgestützt ist.

7. Sitz nach einem oder mehreren der vorhergehenden Ansprüche, dadurch gekennzeichnet, daß die Zahnstange (13) an der Stützschiene (11) festgelegt ist, während Ritzelwelle (15), Getriebemotor (19, 20) und Schaltglied (27) der Laufschiene (12) der Führungsschienenanordnung (10) zugeordnet sind.

## Claims

1. An adjustable seat, in particular for use in a vehicle, preferably a motor vehicle, in which the seat portion, for longitudinal adjustment thereof, is supported on the vehicle floor by way of a guide rail arrangement (10) formed from runner rails (12) and support rails (11), wherein the one rails include racks (13) into which engage pinions (14) which are mounted on the other rails and which are rotationally connected to each other by a transfer shaft (22) and the transfer shaft (22) can be driven by a drive wheel (18) of the motor (19) which includes a transmission (20) and which is fixed to the rail which mounts the pinion (14) by a shaft, characterised in that the output whell (18) which has an entrainment bore (17) extending therethrough and which is mounted in the transmission housing (20) of the motor (19) engages over an entrainment trunnion (16) on the pinion shaft (15) and a transmission sleeve (21) is arranged axially displaceably into and out of torque-transmitting engagement between the entrainment bore (17) of the output whell (18) and the entrainment trunnion (16) of the pinion shaft (15).

2. A seat according to claim 1 characterised in that the pinion shaft (15) has a serration portion (16) into which engage on the one hand the transmission sleeve (21) and on the other hand the transfer shaft (22), wherein the transmission sleeve (21) engages with a serration portion (23) of its outside periphery into the serration configuration (24) of the entrainment bore (17) in the output whell (18) of the transmission motor unit (19, 20).

3. A seat according to claim 1 and/or claim 2 characterised in that besides its serration portion (23), the transmission sleeve (21) has a mounting portion (25) for the entrainment bore (17), on the side of the transmission sleeve which projects into the entrainment bore (17), and on the side which projects out of the entrainment bore (17) the transmission sleeve has an annular groove (26) for engagement of a shift member (27).

4. A seat according to claim 3 characterised in that the shift member (27) is formed from a control lever (27) which has a handle (29) and a shift fork (28) engaging into the annular groove (26) in the transmission sleeve (21).

5. A seat according to claim 4 characterised in that the control lever (27) is pivotably mounted to the rail (12) which carries the pinion shaft (15) and is acted upon by a force storage means (30) which acts in the coupling direction.

6. A seat according to claim 5 characterised in that the force storage means is formed by a leg spring (30) which extends around the control lever (27) and of which one leg (32) is supported against the control lever (27) and the other leg (31) is supported against the rail (12).

7. A seat according to one or more of the preceding claims characterised in that the rack (13) is secured to the support rail (11) while the pinion shaft (15), the transmission motor unit (19, 20) and the shift member (27) are associated with the runner rail (12) of the guide rail arrangement (10) .

## Revendications

1. Siège réglable destiné en particulier à être installé dans un véhicule, de préférence une voiture automobile, dont la partie d'assise s'appuie sur le plancher du véhicule, en vue de son réglage longitudinal, par l'intermédiaire d'un dispositif (10) à rails de guidage constitué par des rails de roulement (12) et par des rails de support (11), certains de ces rails comportant des crémaillères (13) dans lesquelles engrènent des pignons (14) qui sont montés sur les autres rails et qui sont reliés entre eux à la rotation par un arbre de transmission (22), et l'arbre de transmission (22) pouvant être entraîné par une roue d'entraînement (18) du moteur (19) comprenant un engrenage (20), qui est fixé sur le rail sur lequel est monté le pignon (14) au moyen d'un arbre, caractérisé en ce que la roue de sortie (18) qui présente un alésage d'entraînement (17) transversal et qui est montée dans la boîte (20) d'engrenage du moteur (19), entoure une tige d'entraînement (16) de l'arbre (15) de pignon, et en ce qu'entre l'alésage d'entraînement (17) de la roue de sortie (18) et la tige d'entraînement (16) de l'arbre (15) de pignon, un manchon de transmission (21) est disposé pour être déplaçable axialement d'une position de prise avec transmission des couples de rotation vers une position sans transmission des couples de rotation.

2. Siège selon la revendication 1, caractérisé en ce que l'arbre (15) de pignon présente une partie cannelée (16) dans laquelle pénètre d'une part le manchon de transmission (21), et d'autre part l'arbre de transmission (22), le manchon de transmission (21) comportant une partie cannelée (23) sur son pourtour extérieur, pénétrant dans la cannelure (24) de l'alésage d'entraînement (17) de la roue d'entraînement (18) du motoréducteur (19, 20).

3. Siège selon la revendication 1 et/ou la revendication 2, caractérisé en ce que le manchon de transmission (21) présente à côté de sa partie cannelée (23) sur le côté qui pénètre dans l'alésage d'entraînement (17), une partie formant palier (25) destinée à l'alésage d'entraînement (17) et présente aussi sur le côté qui dépasse de l'alésage d'entraînement (17), une gorge annulaire (26) destiné à venir en prise avec par un élément de commutation (27).

4. Siège selon la revendication 3, caractérisé en ce que l'élément de commutation (27) est constitué d'un levier de commande (27) avec une poignée (29) et une fourchette de commutation (28) qui pénètre dans la gorge annulaire (26) du manchon de transmission (21).

5. Siège selon la revendication 4, caractérisé en ce que le levier de commutation (27) est monté de façon à pivoter sur le rail (12) sur lequel est monté l'arbre (15) de pignon et qui est placé sous la contrainte d'un accumulateur de force (30) agissant dans le sens de l'accouplement.

6. Siège selon la revendication 5, caractérisé en ce que l'accumulateur de force est constitué par un ressort (30) à branches entourant le levier de commande (27), dont une branche (32) s'appuie sur le levier de commande (27) et dont l'autre branche (31) s'appuie sur le rail (12).

7. Siège selon une ou plusieurs des revendications précédentes, caractérisé en ce que la crémaillère (13) est fixée sur le rail de soutien (11) tandis que l'arbre (15) de pignon, le motoréducteur (19, 20) et l'élément de commutation (27) sont associés au rail mobile (12) du dispositif (10) de rails de guidage.